# EUROPÄISCHE PATENTSCHRIFT

(11) **EP 1 888 379 B1**
(45) Veröffentlichungstag und Bekanntmachung des Hinweises auf die Patenterteilung: **01.10.2008**
(21) Anmeldenummer: 06742407.7
(22) Anmeldetag: 06.06.2006
(51) Int. Cl.: B60R 21/00

(54) **ABDECKKAPPE FÜR EIN AIRBAGMODUL**
COVER PLATE FOR AN AIRBAG MODULE
COUVERCLE DE FERMETURE POUR MODULE D'AIRBAG

(30) Priorität: 08.06.2005 DE 102005027271
(43) Veröffentlichungstag der Anmeldung: 20.02.2008
(73) Patentinhaber: Takata-Petri AG, 63743 Aschaffenburg (DE)
(72) Erfinder: VATH, Klaus, 63849 Leidersbach (DE); SCHNABEL, Wilhelm, 63843 Niedernberg (DE); HAUCK, Hans Martin, 64380 Rossdorf (DE); HELFRICH, Rudolf, 63743 Aschaffenburg (DE)
(74) Vertreter: Baumgärtel, Gunnar
(86) Internationale Anmeldenummer: PCT/DE2006/001003
(87) Internationale Veröffentlichungsnummer: WO 2006/131109

(56) Entgegenhaltungen:
- EP-A1- 0 609 959
- EP-A2- 1 348 601
- WO-A-98/22312
- DE-A1- 19 941 433
- GB-A- 2 314 299
- GB-A- 2 401 838
- US-A1- 2003 038 460

## Beschreibung

Die Erfindung betrifft eine Abdeckkappe für ein Airbagmodul nach dem Oberbegriff des Anspruchs 1. Eine solche Abdeckkappe ist aus dem Dokument GB 2 314 299 A bekannt.

Eine Abdeckkappe für ein Airbagmodul, insbesondere für ein Fahrerairbagmodul, weist in der Regel ein Abdeckteil, d.h. die Abdeckkappe im engeren Sinne, sowie mehrere miteinander verbundene Wände auf, die mit dem Abdeckteil verbunden sind. Als Wände sind meist eine vordere und eine hintere Wand sowie zwei Seitenwände vorgesehen, die die erstgenannten Wände miteinander verbinden. Im Querschnitt verlaufen die Wände geradlinig oder leicht kurvenförmig.

Bei den bekannten Abdeckkappen haben das Abdeckteil und die Wände etwa die gleiche Wandstärke. Da diese als ein Stück z.B. durch Spritzgießen gefertigt werden, bilden sich an den Übergangsstellen vom Abdeckteil zu den Wänden fertigungsbedingt auf der sichtbaren Oberfläche des Abdeckteils Einfallstellen.

Die Einfallstellen lassen sich vermeiden, wenn das Verhältnis der Wandstärke zur Stärke des Abdeckteils 1: 3 bis maximal 1: 2 beträgt. Bei den bekannten Airbagkappen werden an den Übergangsstellen zum Abdeckteil an den Wänden Ausdünnungen vorgesehen, um das genannte Wandstärkenverhältnis zu erreichen. Diese Ausdünnungen, die Hinterschnitte darstellen, müssen nach der Fertigung mittels Schieber oder durch Zwangsentformung entformt werden. Beide Arten der Entformung weisen Nachteile auf. So kann die Zwangsentformung zur Verformung des Bauteils führen. Schieber sind aufwendig und schränken die Gestaltungsmöglichkeit der Aufreißnaht der Abdeckkappe ein.

Der Erfindung liegt deshalb die Aufgabe zugrunde, Einfallstellen auf der sichtbaren Oberfläche des Abdeckteils an den Übergangsstellen zu den Wänden zu vermeiden, wobei das leichte Entformen der Airbagkappe aus dem Herstellungswerkzeug gewährleistet sein soll.

Erfindungsgemäß wird das gemäß den Merkmalen des Anspruchs 1 erreicht.

Bei einer Abdeckkappe für ein Airbagmodul, insbesondere Fahrerairbagmodul, wobei die Abdeckkappe ein Abdeckteil und mindestens eine Wand aufweist, die im wesentlichen senkrecht zum Abdeckteil verläuft, verläuft die Wand erfindungsgemäß, in ihrem Querschnitt gesehen, in Abständen, die im Verhältnis zur Länge der Wand kurz sind, abwechselnd in unterschiedliche Richtungen, wobei die Wand mäanderförmig verlauft. Mit einem solchen Querschnittsverlauf der Wand ist es möglich, diese wesentlich dünner auszuführen als eine Wand des Standes der Technik, wobei gegenüber dieser die gleiche Steifigkeit erzielt wird. Damit kann das oben genannte Verhältnis der Wandstärke zur Stärke des Abdeckteils ohne Hinterschnitte erreicht werden. Damit können einerseits Einfallstellen auf der Oberfläche des Abdeckteils vermieden werden und andererseits sind keine komplizierten Entformwerkzeuge erforderlich. Weiterhin wird Material und damit auch Gewicht eingespart. Gegenüber den Wänden des Standes der Technik wird auch eine höhere Gestaltungsfreiheit für die Aufreißnaht der Abdeckkappe erzielt.

Öffnungen für die Verrastung eines Generatorträgers mit der Abdeckkappe sind vorzugsweise an Wandabschnitten vorgesehen, die an den mit Befestigungselementen versehenen Wandbereichen des Generatorträgers anliegen. Eine Richtungsänderung des Querschnitts der Wand erfolgt vorzugsweise an den Rändern der Öffnungen.

Die Stärke der Wand weist vorzugsweise die halbe Stärke bis ein Drittel der Stärke des Abdeckteils auf. Um bei dieser Wandstärke eine weitere Erhöhung der Festigkeit der Wand zu erreichen oder um die Wandstärke weiter zu reduzieren, kann die Wand Verstärkungsrippen aufweisen. Diese erfordern ebenfalls keine zusätzlichen Entformwerkzeuge. Die Verstärkungsrippen laufen vorzugsweise etwa senkrecht vom Abdeckteil weg, ohne mit diesem verbunden zu sein.

In einer Ausführungsform sind vier miteinander verbundene Wände vorgesehen, von denen drei im Querschnitt abwechselnd in unterschiedliche Richtungen verlaufen.

Vorzugsweise sind die zwei Seitenwände und die hintere Wand erfindungsgemäß ausgeführt.

Mindestens eine Wand ist zumindest teilweise etwa senkrecht bezüglich des Abdeckteils geschlitzt, um eine elastische Verformung der Wand beim Verrasten mit dem Generatorträger zu erleichtern.

Die Erfindung soll in einem Ausführungsbeispiel anhand von Zeichnungen erläutert werden. Es zeigen:
Fig. 1 die Seitenansicht einer Abdeckkappe des Standes der Technik;
Fig. 2 einen Schnitt II -II durch die Abdeckkappe der Fig. 1;
Fig. 3 einen Schnitt III - III durch die Abdeckkappe der Fig. 1;
Fig. 4 einen Schnitt IV- IV durch die Abdeckkappe der Fig. 1;
Fig. 5 die Seitenansicht einer erfindungsgemäßen Abdeckkappe;
Fig. 6 einen Schnitt VI -VI durch die Abdeckkappe der Fig. 5;
Fig. 7 einen Schnitt VII - VII durch die Abdeckkappe der Fig. 5;
Fig. 8 einen Schnitt VIII - VIII durch die Abdeckkappe der Fig. 5.

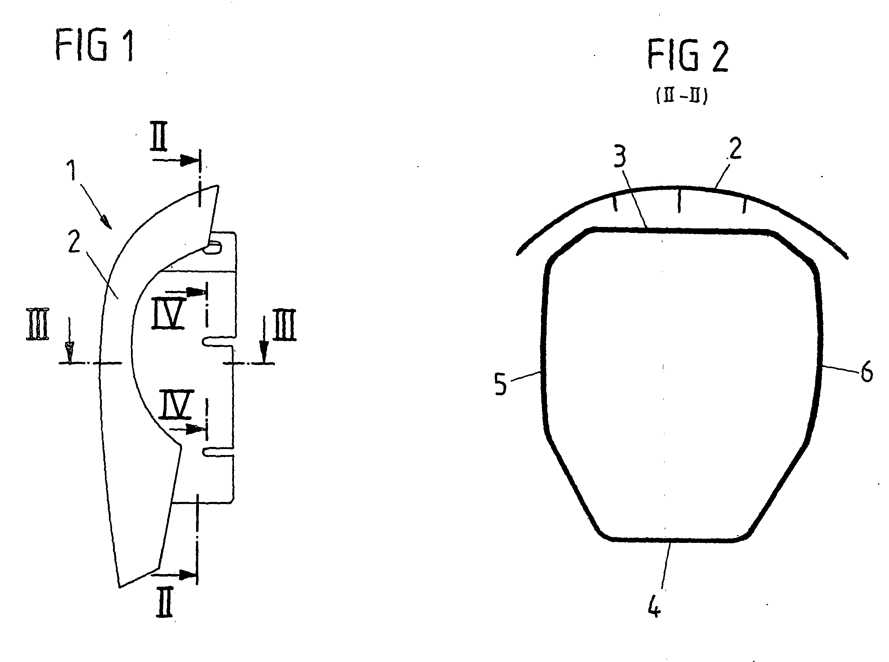

Die in den Figuren 1 und 2 dargestellte Abdeckkappe 1 weist ein Abdeckteil 2, eine vordere Wand 3 und eine hintere Wand 4 auf. Diese beiden Wände sind durch Seitenwände 5, 6 miteinander verbunden. Während die Wände- 3, 4 im Querschnitt im Wesentlichen geradlinig sind, verlaufen die Seitenwände 5, 6 leicht kurvenförmig und sind im vorderen und hinteren Abschnitt nach innen abgeknickt. Durch diesen Verlauf wird jedoch die Festigkeit der Seitenwände 5, 6 gegenüber einem geraden Verlauf kaum verbessert.

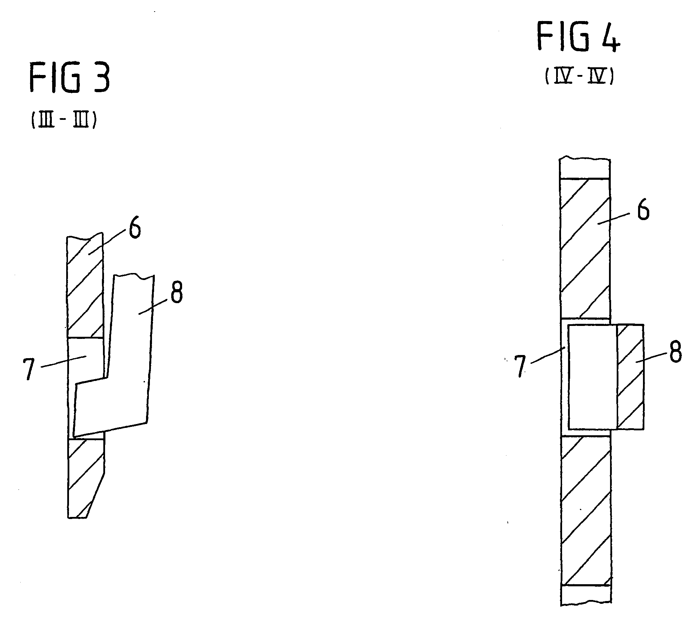

In den Seitenwänden 5, 6 sind Öffnungen vorgesehen, von denen in den Figuren 3 und 4 eine Öffnung 7 dargestellt ist. In diese Öffnungen greifen für das Verrasten eines nicht dargestellten Generatorträgers mit der Abdeckkappe 1 Rasthaken 8 ein.

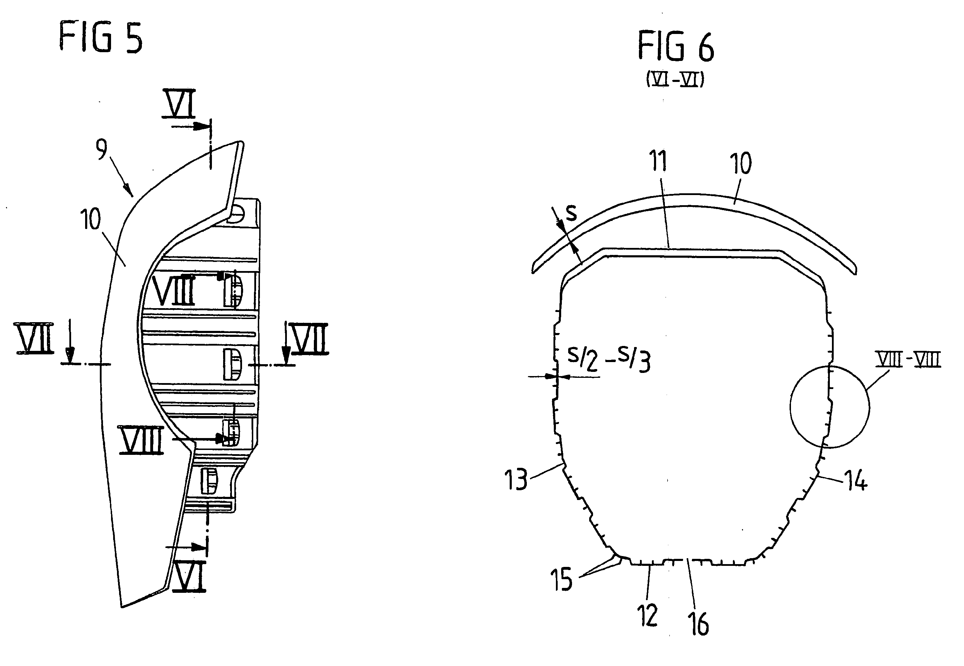

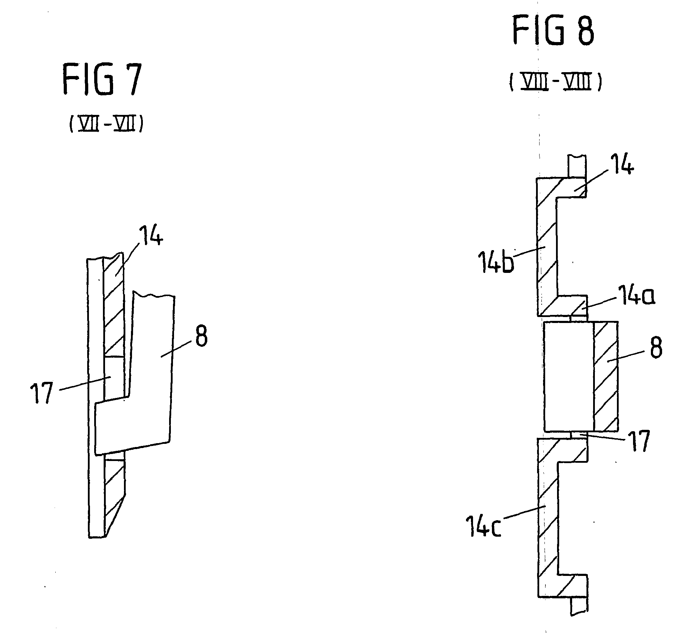

In den Figuren 5 und 6 ist eine erfindungsgemäße Abdeckkappe 9 dargestellt. Diese weist ein Abdeckteil 10, eine vordere Wand 11 und eine hintere Wand 12 auf. Diese beiden Wände sind durch Seitenwände 13, 14 miteinander verbunden. Die hintere Wand 12 und die beiden Seitenwände 13, 14 weisen eine mäanderförmigen Querschnitt auf. Dieser Querschnitt erhöht die Steifigkeit der Wände, so dass diese dünner ausgeführt werden können als die Wände der Abdeckkappe 1 des Standes der Technik. Die Wandstärke beträgt gegenüber der Dicke s des Abdeckteils s/2 bis s/3. Zur weiteren Erhöhung der Steifigkeit der Wände können Verstärkungsrippen 15 angeordnet werden, die etwa senkrecht zum Abdeckteil 10 verlaufen, die aber mit diesem nicht verbunden sind. Die hintere Wand 12 ist durch einen Schlitz 16 abschnittsweise geteilt ausgeführt, um die Verbindung mit einem nicht dargestellten Generatorträger zu erleichtern. In den Seitenwänden 13, 14 sind Öffnungen vorgesehen, von denen in den Figuren 7 und 8 eine Öffnung 17 dargestellt ist. In diese Öffnungen greifen für das Verrasten des nicht dargestellten Generatorträgers mit der Abdeckkappe 9 die Rasthaken 8 des Generatorträgers ein. Wie aus der Fig. 8 ersichtlich ist, befindet sich die Öffnung 17 in einem nach außen ragenden Wandabschnitt 14a, dem sich bei diesem mäanderförmigen Querschnitt zwei nach innen ragende Abschnitte 14b, c anschließen. Wie weiterhin aus der Fig. 8 ersichtlich ist, erfolgt eine Richtungsänderung des Querschnitts der Wand an den Rändern der Öffnung 17.

## Patentansprüche

1. Abdeckkappe für ein Airbagmodul, insbesondere Fahrerairbagmodul, wobei die Abdeckkappe ein Abdeckteil und mindestens eine Wand aufweist, die im Wesentlichen senkrecht zum Abdeckteil verläuft,
**dadurch gekennzeichnet, dass** die Wand (12, 13, 14), in ihrem Querschnitt gesehen, in Abständen, die im Verhältnis zur Länge der Wand kurz sind, abwechselnd in unterschiedliche Richtungen und somit mäanderförmig verläuft.

2. Abdeckkappe nach Anspruch 1, **dadurch gekennzeichnet, dass** Öffnungen (17) für die Verrastung eines Generatorträgers mit der Abdeckkappe (9) an Wandabschnitten (14a) vorgesehen sind, die an den mit Befestigungselementen (8) versehenen Wandbereichen des Generatorträgers anliegen.

3. Abdeckkappe nach Anspruch 2, **dadurch gekennzeichnet, dass** eine Richtungsänderung des Querschnitts der Wand (12, 13, 14) an den Rändern der Öffnungen (17) erfolgt.

4. Abdeckkappe nach mindestens einem der vorhergehenden Ansprüche, **dadurch gekennzeichnet, dass** die Stärke der Wand (12, 13, 14) die halbe Stärke bis ein Drittel der Stärke des Abdeckteils (10) aufweist.

5. Abdeckkappe nach mindestens einem der vorhergehenden Ansprüche, **dadurch gekennzeichnet, dass** die Wand (12; 13, 14) Verstärkungsrippen (15) aufweist.

6. Abdeckkappe nach Anspruch 5, **dadurch gekennzeichnet, dass** die Verstärkungsrippen (15) etwa senkrecht vom Abdeckteil (10) weg verlaufen, ohne mit diesem verbunden zu sein.

7. Abdeckkappe nach mindestens einem der vorhergehenden Ansprüche, **dadurch gekennzeichnet, dass** vier miteinander verbundene Wände (11, 12, 13, 14) vorgesehen sind, von denen drei (12, 13, 14) im Querschnitt abwechselnd in unterschiedliche Richtungen verlaufen.

8. Abdeckkappe nach Anspruch 7, **dadurch gekennzeichnet, dass** zwei Seitenwände (13, 14) und eine hintere Wand (12) im Querschnitt abwechselnd in unterschiedliche Richtungen verlaufen.

9. Abdeckkappe nach Anspruch 7 oder 8, **dadurch gekennzeichnet, dass** mindestens eine Wand (12) zumindest teilweise etwa senkrecht bezüglich des Abdeckteils (10) geschlitzt ist.

## Claims

1. Cover plate for an airbag module, in particular driver's airbag module, the cover plate having a cover part and at least one wall which runs essentially perpendicularly to the cover part, **characterized in that** the wall (12, 13, 14), as seen in its cross section, runs in different directions in an alternating manner at distances which are short in relation to the length of the wall and therefore in a meandering manner.

2. Cover plate according to Claim 1, **characterized in that** openings (17) are provided for latching a generator support to the cover plate (9) at wall sections (14a) which bear against those wall regions of the generator support which are provided with fastening elements (8).

3. Cover plate according to Claim 2, **characterized in that** the cross section of the wall (12, 13, 14) changes in direction at the edges of the openings (17).

4. Cover plate according to at least one of the preceding claims, **characterized in that** the thickness of the wall (12, 13, 14) is half to a third of the thickness of the cover part (10).

5. Cover plate according to at least one of the preceding claims, **characterized in that** the wall (12, 13, 14) has reinforcing ribs (15).

6. Cover plate according to Claim 5, **characterized in that** the reinforcing ribs (15) run away approximately perpendicularly from the cover part (10) without being connected to the latter.

7. Cover plate according to at least one of the preceding claims, **characterized in that** four interconnected walls (11, 12, 13, 14) are provided, of which three (12, 13, 14) run in different directions in an alternating manner in cross section.

8. Cover plate according to Claim 7, **characterized in that** two side walls (13, 14) and a rear wall (12) run in different directions in an alternating manner in cross section.

9. Cover plate according to Claim 7 or 8,
**characterized in that** at least one wall (12) is at least partially slit approximately perpendicularly with respect to the cover part (10).

## Revendications

1. Couvercle de recouvrement pour un module d'airbag, en particulier un module d'airbag conducteur, le couvercle de recouvrement comprenant une partie de recouvrement et au moins une paroi qui s'étend essentiellement perpendiculairement à la partie de recouvrement,
**caractérisé en ce que** la paroi (12, 13, 14), vu en coupe transversale, s'étend par intervalles, qui sont courts par rapport à la longueur de la paroi, en alternance dans différentes directions et ainsi en forme de méandres.

2. Couvercle de recouvrement selon la revendication 1, **caractérisé en ce que** des ouvertures (17) pour l'enclenchement d'un support de générateur avec le couvercle de recouvrement (9) sont prévues sur des sections de paroi (14a), qui reposent sur les zones de paroi du support de générateur pourvues d'éléments de fixation (8).

3. Couvercle de recouvrement selon la revendication 2, **caractérisé en ce qu'**un changement de direction de la section transversale de la paroi (12, 13, 14) s'effectue sur les bords des ouvertures (17).

4. Couvercle de recouvrement selon au moins l'une des revendications précédentes,
**caractérisé en ce que** l'épaisseur de la paroi (12, 13, 14) présente de la moitié de l'épaisseur jusqu'à un tiers de l'épaisseur de la partie de recouvrement (10).

5. Couvercle de recouvrement selon au moins l'une des revendications précédentes,
**caractérisé en ce que** la paroi (12, 13, 14) comprend des nervures de renforcement (15).

6. Couvercle de recouvrement selon la revendication 5, **caractérisé en ce que** les nervures de renforcement (15) s'étendent à peu près verticalement à distance de la partie de recouvrement (10) sans être reliées à celle-ci.

7. Couvercle de recouvrement selon au moins l'une des revendications précédentes,
**caractérisé en ce que** quatre parois (11, 12, 13, 14) reliées les unes aux autres sont prévues, parmi lesquelles trois (12, 13, 14) s'étendent en section transversale en alternance dans différentes directions.

8. Couvercle de recouvrement selon la revendication 7, **caractérisé en ce que** deux parois latérales (13, 14) et une paroi arrière (12) s'étendent en section transversale en alternance dans différentes directions.

9. Couvercle de recouvrement selon la revendication 7 ou 8, **caractérisé en ce qu'**au moins une paroi (12) est fendue au moins en partie à peu près perpendiculairement par rapport à la partie de recouvrement (10).
